# EUROPÄISCHE PATENTSCHRIFT

(11) **EP 1 007 834 B1**
(45) Veröffentlichungstag und Bekanntmachung des Hinweises auf die Patenterteilung: **11.09.2002**
(21) Anmeldenummer: 98936330.4
(22) Anmeldetag: 12.06.1998
(51) Int. Cl.: F02F 7/00, F02B 67/06

(54) **NEBENAGGREGATEMODUL FÜR EINE BRENNKRAFTMASCHINE**
ACCESSORY MODULE FOR INTERNAL COMBUSTION ENGINE
MODULE ACCESSOIRE POUR MOTEUR A COMBUSTION INTERNE

(30) Priorität: 28.07.1997 DE 19732370
(43) Veröffentlichungstag der Anmeldung: 14.06.2000
(73) Patentinhaber: Volkswagen Aktiengesellschaft, 38436 Wolfsburg (DE)
(72) Erfinder: WILLMANN, Michael, D-38440 Wolfsburg (DE)
(86) Internationale Anmeldenummer: EP9803547
(87) Internationale Veröffentlichungsnummer: WO99006687

(56) Entgegenhaltungen:
- DE-A- 2 854 992
- GB-A- 235 208
- US-A- 5 125 376
- US-A- 5 692 466
- RONNIGER C U ET AL: "AUSLEGUNG, BERECHNUNG UND LEBENSDAUER VON KEILRIPPENRIEMEN" MTZ MOTORTECHNISCHE ZEITSCHRIFT, Bd. 54, Nr. 3, 1. März 1993, Seiten 122-124, 126, 128 - 132, XP000349792

## Beschreibung

Die Erfindung betrifft ein Nebenaggregatemodul einer Brennkraftmaschine, mit einem an der Brennkraftmaschine befestigbaren Aggregateträger und wenigstens einem an dem Aggregateträger befestigten Nebenaggregat, gemäß dem Oberbegriff von Abspruch 1.

Nebenaggregate dienen für die ordnungsgemäße Funktion der Brennkraftmaschine und bedienen Zusatzfunktionen. Derartige Nebenaggregate sind beispielsweise ein Generator, ein Klimakompressor, eine Wasserpumpe, eine Ölpumpe oder ähnliches. Diese Nebenaggregate werden mittels eines Antriebsriemens von der Brennkraftmaschine angetrieben, der von einer Riemenscheibe einer Kurbelwelle der Brennkraftmaschine über entsprechende Riemenscheiben an den Nebenaggregaten verläuft. Ein besonderes Problem liegt darin, daß der Riemen für einen verlustfreien und verschleißarmen Lauf möglichst in einer Ebene laufen muß. Mit anderen Worten müssen die Riemenscheiben der verschiedenen Nebenaggregate exakt parallel zueinander und zur Riemenscheibe der Kurbelwelle ausgerichtet sein, wobei sich diese Ausrichtung auch unter Last möglichst nicht ändern sollte.

Hierzu ist es beispielsweise aus der DE-OS 28 54 992, der DE 36 26 091 C2, der DE 30 48 449 C2, der DE 42 14 799 A1 und dem Artikel "Leichtbau-Kurbelgehäuse für einen aufgeladenen Dieselmotor mit direkter Einspritzung" von Jörg Abthoff et. al., Sonderausgabe von ATZ und MTZ, 28.10.1996, bekannt, Nebenaggregate einer Brennkraftmaschine in einem gemeinsamen Aggregateträger vorzusehen. Ferner wird in der DE 195 43 350 C1 vorgeschlagen, statt eines separaten Aggregateträgers die Einbaustellen für Nebenaggregate in einen Steuergehäusedeckel zu integrieren. Diese Anordnungen haben jedoch den Nachteil, daß es aufgrund der vielen Verbindungsstellen mit entsprechenden Toleranzen zwischen den Riemenscheiben der Nebenaggregate an sich und bezüglich der Riemenscheibe der Kurbelwelle zu einer Summe von Ausrichtungsfehlern kommt, die sich unter Last noch verstärken, da die vielen Verbindungsstellen entsprechende Bewegungsfreiheitsgrade beinhalten. Eine exakte Ausrichtung der Riemenscheiben zueinander ist nicht mehr gewährleistet und es ergibt sich die Gefahr, daß erhöhter Verschleiß den Antriebsriemen beschädigt oder zerstört.

Der vorliegenden Erfindung liegt daher die Aufgabe zugrunde, ein verbessertes Nebenaggregatemodul der obengenannten Art zur Verfügung zu stellen, wobei die obengenannten Nachteile überwunden werden und ohne zusätzliche Justierungen bei der Montage einer Brennkraftmaschine eine optimale und dauerhafte Justierung der Riemenscheiben zueinander und somit eine verbesserte Riemenstandzeit gewährleistet ist.

Diese Aufgabe wird erfindungsgemäß durch ein Nebenaggregatemodul der o.g. Art mit den in Anspruch 1 gekennzeichneten Merkmalen gelöst. Vorteilhafte Ausgestaltungen der Erfindung sind in den abhängigen Ansprüchen angegeben.

Dazu ist es erfindungsgemäß vorgesehen, daß mit dem Aggregateträger einstückig ein Gehäuse des wenigstens einen Nebenaggregats wenigstens teilweise ausgebildet ist.

Dies hat den Vorteil, daß eine mit Toleranzen behaftete Verbindungsstelle zwischen dem Aggregateträger und den Nebenaggregaten vollständig entfällt. Dies erhöht die Laufgenauigkeit eines Antriebsriemens für die Nebenaggregate erheblich, reduziert dessen Verschleiß und erhöht somit in bemerkenswerter Weise die Lebensdauer des Antriebsriemens. Ferner erhöht sich in erwünschter Weise die Steifigkeit des Aggregateträgers, so daß eine Bewegung der Nebenaggregate relativ zueinander, mit entsprechender Verminderung der Laufgenauigkeit des Antriebsriemens in einer Ebene, auch unter Last wirksam vermieden ist. Gleichzeitiger sind die Nebenaggregate noch kompakter und noch enger an der Brennkraftmaschine anordnbar, was zusätzlich Bauraum einspart.

Zum Antrieb der Nebenaggregate durch die Brennkraftmaschine ist in vorteilhafter Weise das wenigstens eine Nebenaggregat mittels eines Antriebsriemens, insbesondere eines Poly-V-Riemens, mit einer Kurbelwelle der Brennkraftmaschine verbunden.

Für einen möglichst verlustfreien Antrieb der Nebenaggregate mit einem möglichst geringen Verschleiß bezüglich des Antriebsriemens weist dabei in besonders bevorzugter Weise jedes Nebenaggregat eine Riemenscheibe auf, wobei der Antriebsriemen über die Riemenscheibe der Kurbelwelle und die Riemenscheiben der Nebenaggregate im wesentlichen in einer Ebene verläuft.

In einer bevorzugten Weiterbildung der Erfindung ist ein Gehäuse des wenigstens einen Nebenaggregats vollständig einstückig mit dem Aggregateträger ausgebildet. Dies erhöht wesentlich die Justiergenauigkeit zwischen den Nebenaggregaten selbst, da Gehäusetrennfugen bereits einstückig mit dem Aggregateträger vordefiniert und fest ausgebildet sind.

Zur weiteren Gewichtsreduzierung sind bevorzugt Fluidkanäle zum Zu- und/oder Abfließen eines Kühl- und/oder Arbeitsmediums für wenigstens ein Nebenaggregat integral im Aggregateträger ausgebildet. In besonders bevorzugter Weise ist ferner der Aggregateträger als Aluminiumdruckguß-Aggregateträger ausgebildet.

Eine weitere Reduzierung von toleranzbehafteten Verbindungsstellen wird dadurch erzielt, daß Bauelemente des wenigstens einen Nebenaggregats einstückig mit dem Aggregateträger ausgebildet sind.

Zweckmäßigerweise und beispielsweise je nach gewünschter Einbaulage der Brennkraftmaschine ist der Aggregateträger an einer Stirnseite oder seitlich an der Brennkraftmaschine befestigbar.

In einer besonders bevorzugten Ausführungsform der Erfindung ist das wenigstens eine Nebenaggregat ein Klimakompressor, ein flüssigkeitsgekühlter Generator, eine Wasserpumpe, eine Lenkhilfepumpe und/oder eine Ölpumpe.

Zur weiteren Gewichtsreduzierung und für eine noch kompaktere Bauweise ist in besonders bevorzugter Weise bei einem Klimakompressor als Nebenaggregat eine Kolbenlaufbahn desselben einstückig mit dem Aggregateträger ausgebildet ist.

Für eine optimale Riemenspannung in allen Betriebsphasen ist femer in besonders bevorzugter Weise eine Riemenspanneinrichtung am Aggregateträger angeordnet.

Weitere Merkmale, Vorteile und vorteilhafte Ausgestaltungen der Erfindung ergeben sich aus den abhängigen Ansprüchen, sowie aus der nachstehenden, beispielhaften Beschreibung der Erfindung anhand der beigefügten Zeichnungen. Diese zeigen in
- Fig. 1: eine bevorzugte Ausführungsform eines Aggregateträgers eines erfindungsgemäßen Nebenaggregatemoduls in Aufsicht,
- Fig. 2: in Schnittansicht entlang der Linie A-A in Figur 1,
- Fig. 3: in Netzdarstellung in einer Ansicht von vorne,
- Fig. 4: in Netzdarstellung in einer Ansicht von links,
- Fig. 5: in Netzdarstellung in einer Ansicht von hinten,
- Fig. 6: in Netzdarstellung in einer Ansicht von rechts,
- Fig. 7: in Netzdarstellung in einer Ansicht von oben,
- Fig. 8 bis 10: in Netzdarstellung in verschiedenen perspektivischen Ansichten,
- Fig. 11: einen Antriebsriemenlauf über Riemenscheiben in schematischer Darstellung,
- Fig. 12: Bauelemente eines in einen Aggregateträger einzubauenden Klimakompressors in Explosionsdarstellung,
- Fig. 13: Bauelemente einer in einen Aggregateträger einzubauenden Lenkhilfepumpe in Explosionsdarstellung,
- Fig. 14: Bauelemente eines in einen Aggregateträger einzubauenden flüssigkeitsgekühlten Generators in Explosionsdarstellung,
- Fig. 15: Anordnung einer hydraulisch gedämpften Riemenspanneinrichtung in schematischer Darstellung und
- Fig. 16: eine Schnittansicht entlang der Linie B-B von Figur 15.

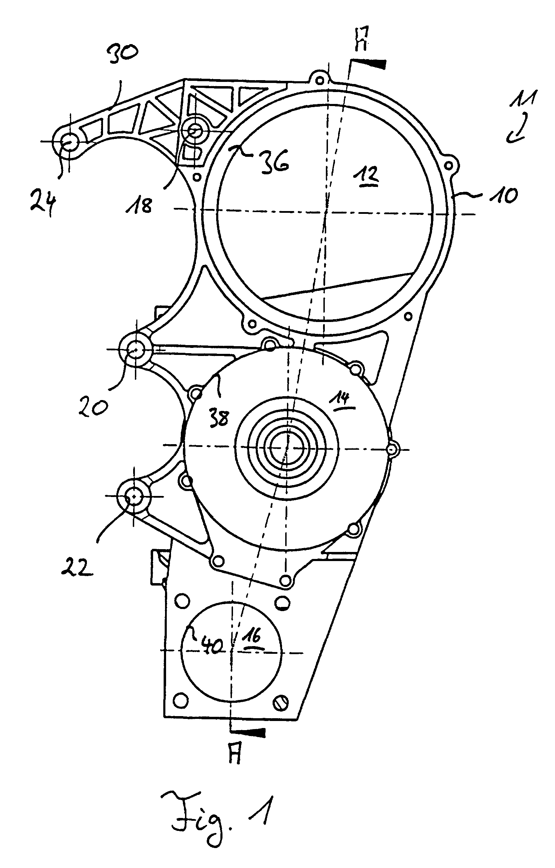

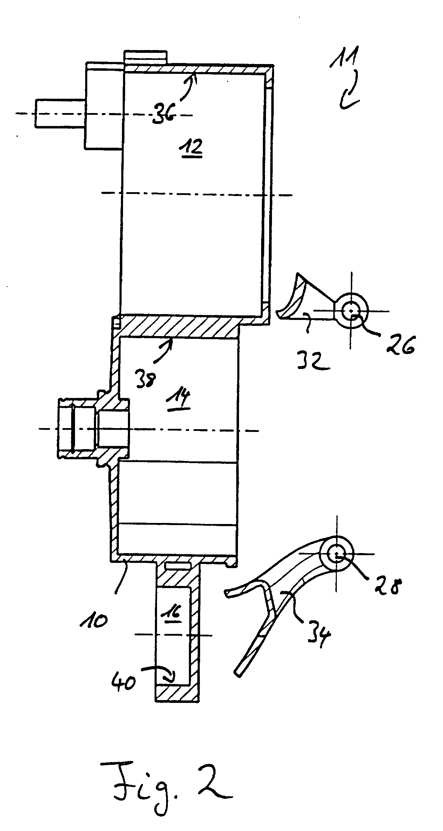

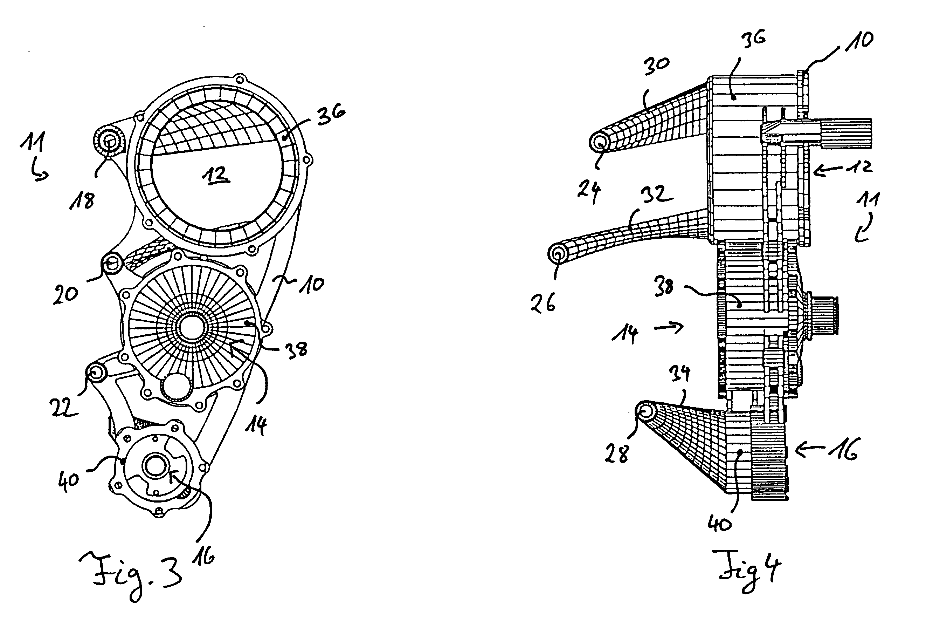

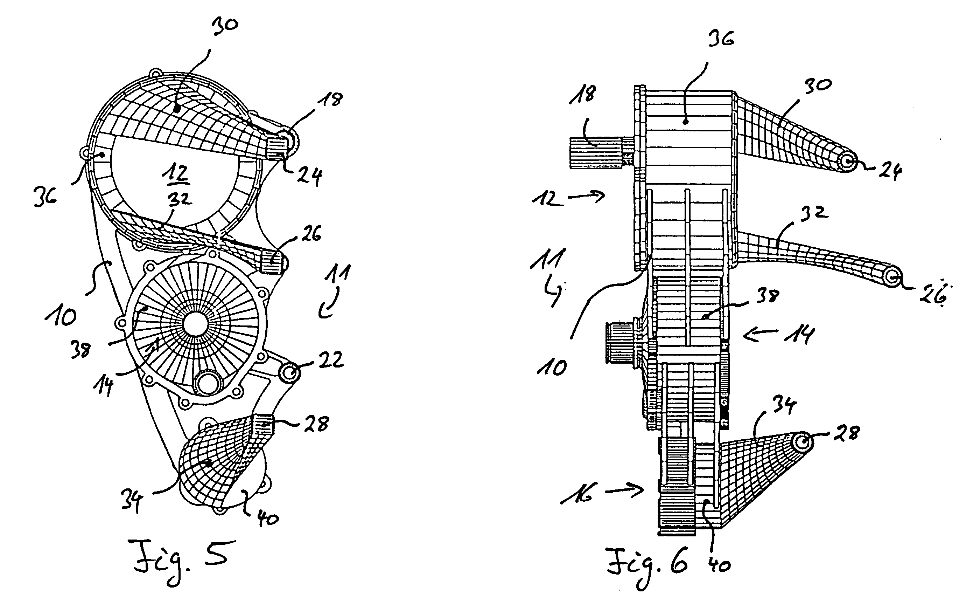

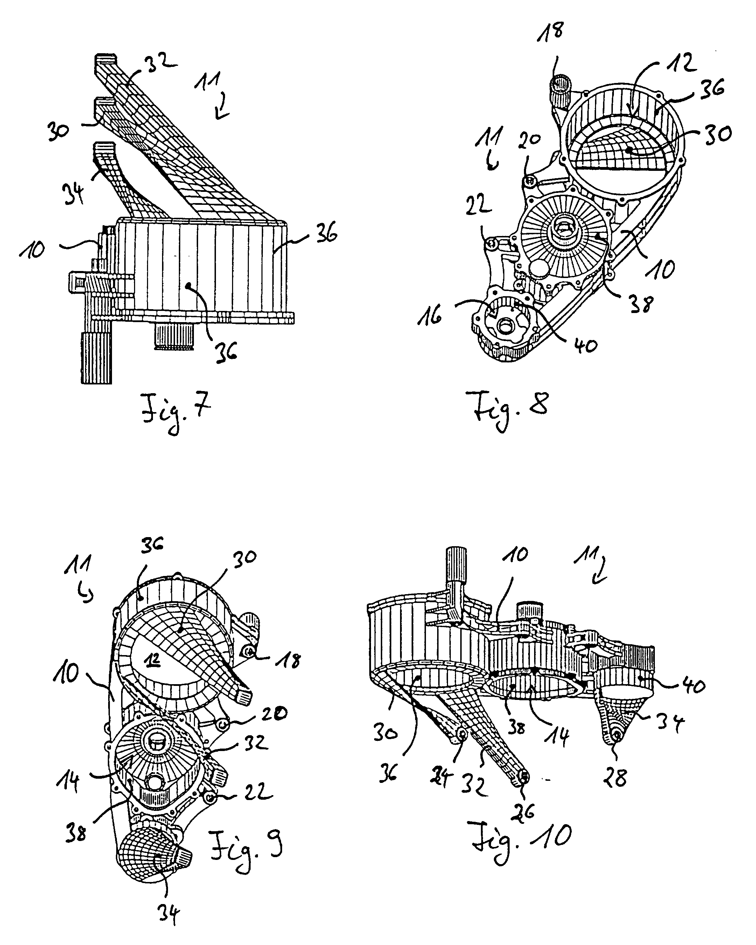

Die in Figuren 1 bis 10 dargestellte bevorzugte Ausführungsform eines erfindungsgemäßen Aggregateträgers 11 umfaßt einen Rahmen 10, Einbauschächte 12, 14, 16 für Nebenaggregate und Befestigungsaugen 18, 20 und 22. Ferner sind zusätzliche Befestigungspunkte 24, 26 und 28 an Armen 30, 32 und 34 vorgesehen, welche für eine erhöhte Steifigkeit des Aggregateträgers 11 bezüglich einer nicht dargestellten Brennkraftmaschine bzw. bezüglich eines Kurbelgehäuses der Brennkraftmaschine, an dem das Nebenaggregatemodul befestigt ist, sorgen. Wie insbesondere aus Figuren 2, 3 und 8 bis 9 ersichtlich, ist der Rahmen 10 derart ausgebildet, daß er integral Gehäuse 36, 38 und 40 für die in die Einbauschächte 12, 14 und 16 einzubauenden Nebenaggregate ausbildet. Die einzelnen weiteren Bauelemente werden direkt in den Aggregateträger 11 eingebaut, so daß keine Fugen zwischen den Gehäusen 36, 38, 40 und dem Aggregateträger 11 mehr vorhanden sind. Die direkt im Aggregateträger 11 ausgebildeten Gehäuse 36, 38 und 40 sorgen unmittelbar für eine definierte Lage der Bauelemente und damit der Nebenaggregate zueinander und über die Befestigungsaugen 18, 20, 22 und -punkte 24, 26, 28 auch für eine definierte Lage der Nebenaggregate zu einer Kurbelwelle der zugehörigen Brennkraftmaschine.

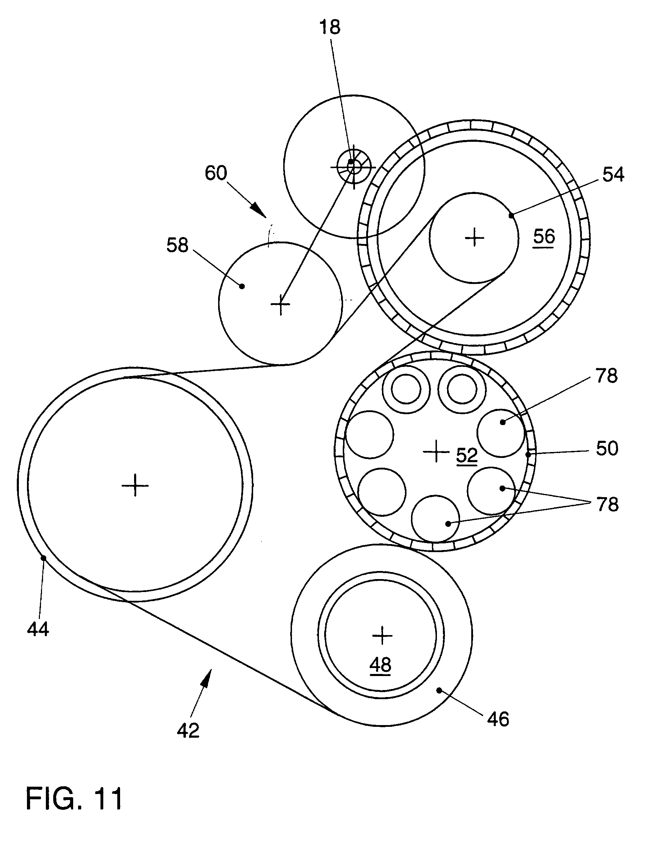

Figur 11 zeigt den Verlauf eines Antriebsriemens 42 über eine Riemenscheibe 44 einer nicht dargestellten Kurbelwelle, eine Riemenscheibe 46 einer Lenkhilfepumpe 48, eine Riemenscheibe 50 eines Klimakompressors 52, eine Riemenscheibe 54 eines flüssigkeitsgekühlten Generators 56 und eine Rolle 58 einer Riemenspanneinrichtung 60. Die Riemenspanneinrichtung 60 ist dabei bevorzugt ein hydraulisch gedämpftes Riemenespannelement, welches am Befestigungsauge 18 angeordnet wird. Durch die definierte Lage der Bauelemente der Nebenaggregate 48, 52 und 56 haben auch die Riemenscheiben 46, 50, 54 eine exakt definierte Lage zueinander und zur Riemenscheibe 44 der Kurbelwelle derart, daß der Antriebsriemen 42 genau in einer Ebene läuft. Dadurch ist ein geringstmöglicher Verschleiß und damit eine lange Lebensdauer des Riemens 42 gewährleistet.

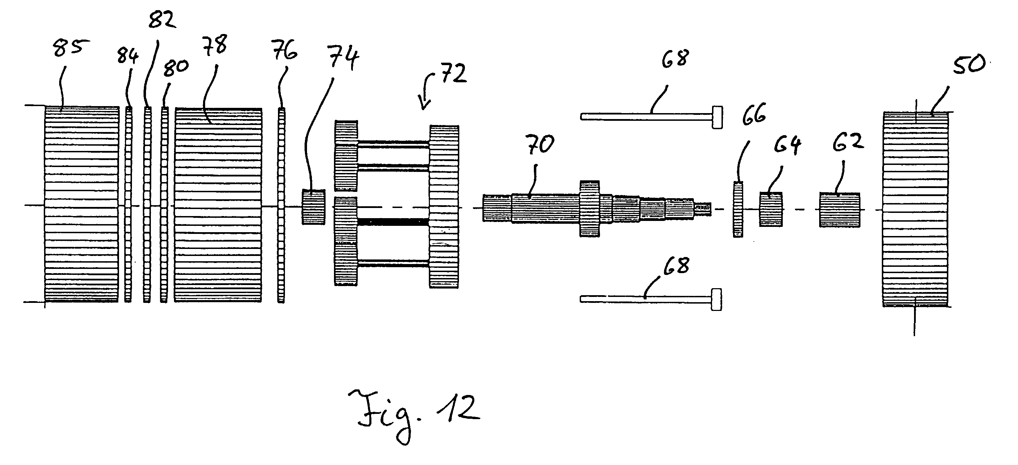

Figur 12 zeigt beispielhaft Bauelemente eines Klimakompressors 52, welche in einen erfindungsgemäßen Aggregateträger 11 einzubauen sind. In der beispielhaften Darstellung der Figuren 1 bis 10 wäre dies der das Gehäuse 38 bildende Einbauschacht 14. Diese Bauteile umfassen die Riemenscheibe 50 des Klimakompressors 52, eine Wellendichtung 62, ein Radiallager 64, ein Axiallager 66, Gehäuseschrauben 68 zum Rahmen 10, eine Antriebswelle 70, eine Taumelscheibe mit Kolben 72, ein Radiallager 74, eine Dichtung 76 zum Aggregateträger 11, eine Kolbenlaufbahn 78, eine Dichtung 80, eine Ventilplatte 82 mit Ein-/Auslaßventilen, eine weitere Dichtung 84 und einen rückwärtigen Dekkel 85.

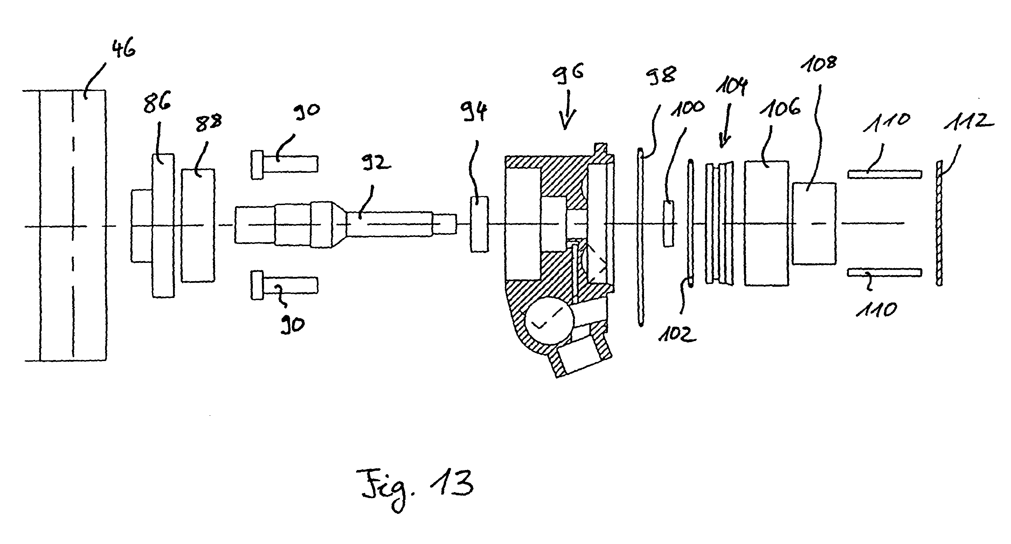

Eine analoge Darstellung zeigt Figur 13 für eine Lenkhilfepumpe 48. Die entsprechenden Bauelemente, welche in der Ausführungsform gemäß Figuren 1 bis 10 in den das Gehäuse 40 bildenden Einbauschacht 16 einzubauen sind umfassen die Riemenscheibe 46, ein Riemenscheibenadapter 86, ein Festlager 88, Gehäuseschrauben 90, eine Läuferwelle 92, eine Radialwellendichtung 94, einen vorderen Pumpendeckel 96 mit Druckregelventil und Ein- und Auslaßanschlüssen, ein Gehäusedichtelement 98, ein Dichtelement 100, einen O-Ring 102, druckseitige Steuerkanten 104, einen Laufring 106, ein Flügelzellenrad 108 mit Flügeln, Klemm- und Fixierstifte 110 und eine Dicht- und Steuerkantenscheibe 112 mit Druckraumkanälen.

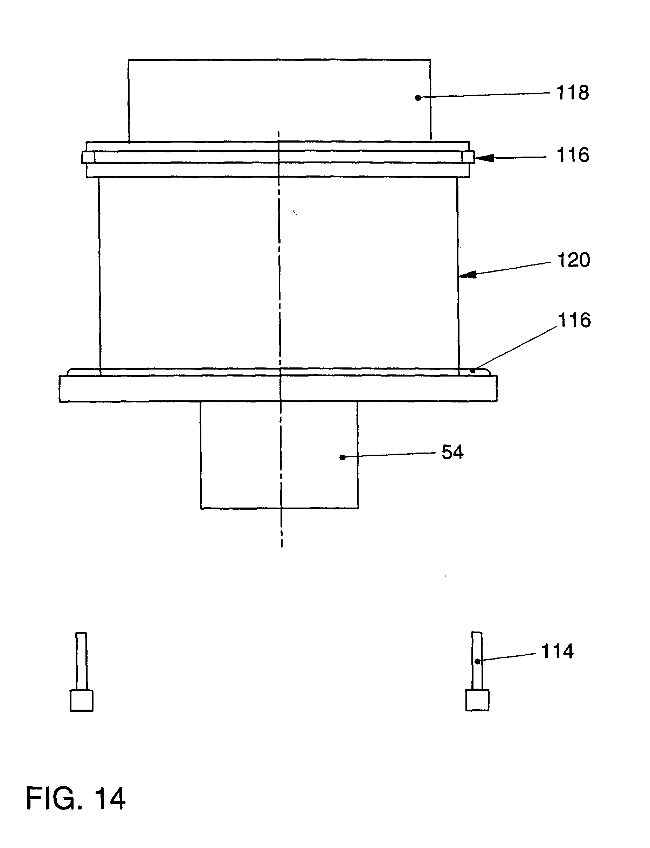

Eine weitere analoge Darstellung zeigt Figur 14 für einen flüssigkeitsgekühlten Generator 56. Die entsprechenden Bauelemente, welche in der Ausführungsform gemäß Figuren 1 bis 10 in den das Gehäuse 36 bildenden Einbauschacht 12 einzubauen sind, umfassen Gehäuseschrauben 114, die Riemenscheibe 54, eine Dichtung 116 für einen Wassermantel und eine Regelung 118. Mit Bezugsziffer 120 ist der Generator ohne Wassermantel und ohne Außenhülle des Wassermantels bezeichnet.

In einer besonders bevorzugten Weiterbildung können auch weitere Bauelemente der Nebenaggregate 48, 52, 56 einstückig mit dem Rahmen 10 des Aggregateträgers 11 ausgebildet sein. So beispielsweise die Kolbenlaufbahnen 78 des Klimakompressors 52, wie in Figur 11 angedeutet.

Die Einbaurichtung der Bauteile in die Einbauschächte 12, 14 und 16 kann frei gewählt werden. Bei dem Beispiel gemäß Figur 1 bis 10 und bezogen auf die Darstellung von Figur 2 erfolgt der Einbau des Generators 56 in das Gehäuse 36 von links, der Einbau des Klimakompressors 52 in das Gehäuse 38 von rechts und der Einbau der Lenkhilfepumpe 48 in das Gehäuse 40 wieder von links.

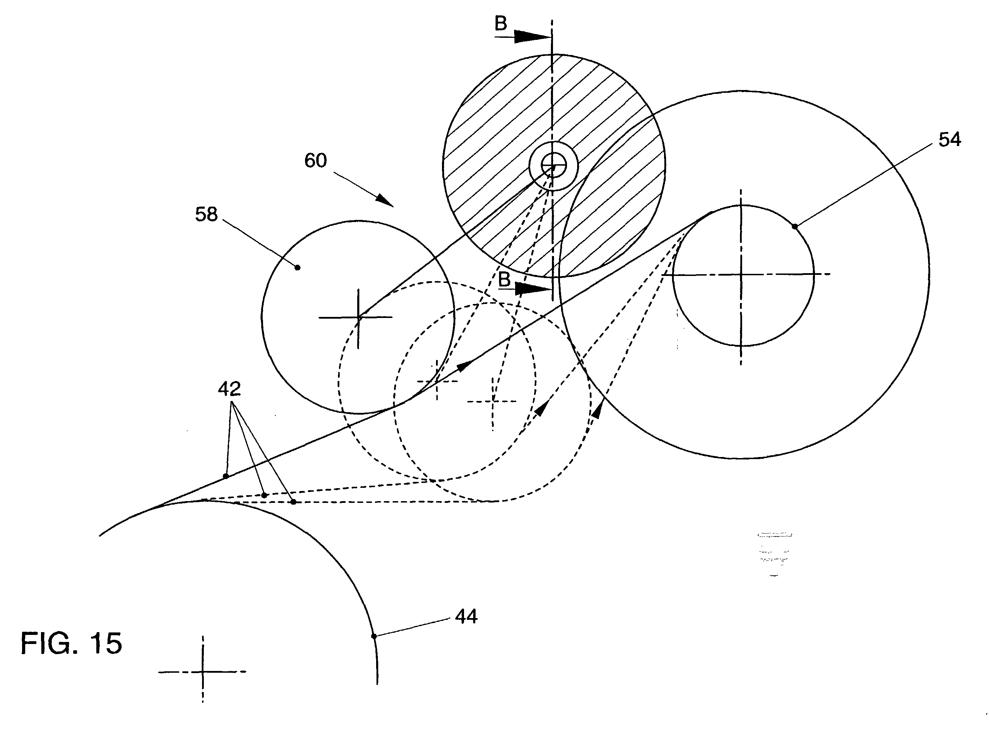

Die Figur 15 zeigt schematisch die Funktion der Riemenspanneinrichtung 60. Diese ist am Befestigungsauge 18 angeordnet und umfaßt die auf den Riemen 42 drückende Rolle 58. Mit gestrichelten bzw. punktstrichlierten Linien sind zwei weitere Stellungen der Riemenspanneinrichtung 60 angedeutet, die andeuten, wie die Rolle 58 den Riemen 42 immer weiter eindrückt, um eine vorbestimmte Spannung des Riemens 42 aufrecht zu erhalten.

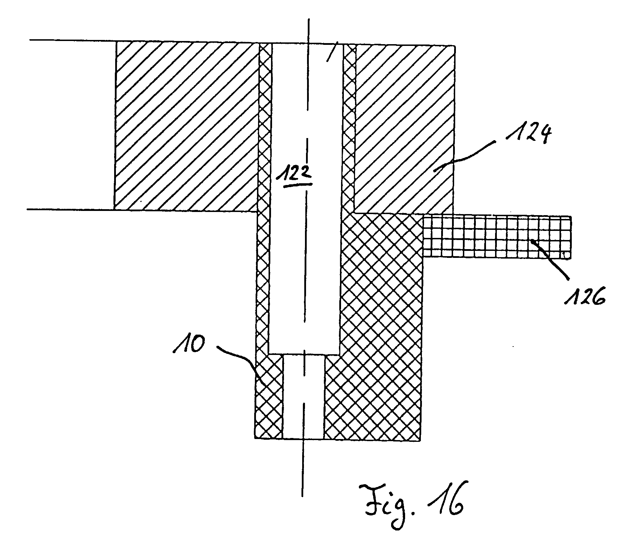

Figur 16 zeigt einen Schnitt entlang der Linie B-B von Figur 15. Mittig befindet sich im Rahmen 10 eine Durchgangsbohrung 122 zur Verbindung des Rahmens 10 an einem Kurbelgehäuse der Brennkraftmaschine. Im oberen Bereich befindet sich ein Bauraum 124 für die Riemenspanneinrichtung 60. Ein im Schnitt B-B sichtbares vorderes Lagerschild 126 des Generators 56 ist abnehmbar.

Der Aggregateträger 11 ist in bevorzugter Weise ein Gußteil, insbesondere ein Alu-Druckgußteil, wobei wenigstens Teile der Gehäuse 36, 38, 40 der Nebenaggregate 48, 52, 56 mit dem Rahmen 10 bzw. dem Aggregateträger 11 zusammengegossen sind, so daß die Gehäusetrennfuge eine Verbindungsstelle zwischen Rahmen 10 und Nebenaggregaten 48, 50, 54 ist. Die bisher übliche Verbindungsstelle mit ihren Toleranzen entfällt. Trägergehäuseseitige statische Dichtflächen sind bevorzugt nur spanend plan bearbeitet, insbesondere gebohrt. Über die Gehäusetrennfuge hinaus sind in besonders bevorzugter Weise keine weiteren Halterungen zwischen den Gehäusen 36, 38, 40 und den Nebenaggregaten 48, 52, 56 ausgebildet.

Die Befestigungspunkte 24, 26, 28 der Arme 30, 32, 34 sind mit entsprechender Toleranz relativ zur Brennkraftmaschine in Längsschlitzen befestigt. Das erfindungsgemäße Nebenaggregatemodul wird dabei beispielsweise an ein Kurbelgehäuse der Brennkraftmaschine geschraubt.

## Patentansprüche

1. Nebenaggregatemodul einer Brennkraftmaschine, mit einem an der Brennkraftmaschine befestigbaren Aggregateträger (11) und wenigstens einem an dem Aggregateträger (11) befestigten und mittels eines Antriebsriemens von der Brennkraftmaschine angetriebenen Nebenaggregat (48, 52, 56),
**dadurch gekennzeichnet, daß**
mit dem Aggregateträger (11) einstückig ein Gehäuse (36, 38, 40) des wenigstens einen Nebenaggregats (48, 52, 56) wenigstens teilweise ausgebildet ist.

2. Nebenaggregatemodul nach Anspruch 1,
**dadurch gekennzeichnet, daß**
das wenigstens eine Nebenaggregat (48,52,56) mittels eines Antriebsriemens (42), insbesondere eines Poly-V-Riemens, mit einer Riemenscheibe (44) der Kurbelwelle der Brennkraftmaschine verbunden ist.

3. Nebenaggregatemodul nach Anspruch 2,
**dadurch gekennzeichnet, daß**
jedes Nebenaggregat (48,52,56) eine Riemenscheibe (46,50,54) aufweist, wobei der Antriebsriemen (42) über die Riemenscheibe (44) der Kurbelwelle und die Riemenscheiben (46,50,54) der Nebenaggregate (48,52,56) im wesentlichen in einer Ebene verläuft.

4. Nebenaggregatemodul nach einem der vorhergehenden Ansprüche,
**dadurch gekennzeichnet, daß**
ein Gehäuse (36,38,40) des wenigstens einen Nebenaggregats (48,52,56) vollständig einstückig mit dem Aggregateträger (11) ausgebildet ist.

5. Nebenaggregatemodul nach einem der vorhergehenden Ansprüche,
**dadurch gekennzeichnet, daß**
Fluidkanäle zum Zu- und/oder Abfließen eines Kühl- und/oder Arbeitsmediums für wenigstens ein Nebenaggregat (48,52,56) integral im Aggregateträger (11) ausgebildet sind.

6. Nebenaggregatemodul nach einem der vorhergehenden Ansprüche,
**dadurch gekennzeichnet, daß**
Bauelemente (62-118) des wenigstens einen Nebenaggregats (48,52,56) einstükkig mit dem Aggregateträger (11) ausgebildet sind.

7. Nebenaggregatemodul nach einem der vorhergehenden Ansprüche,
**dadurch gekennzeichnet, daß**
der Aggregateträger (11) als Aluminiumdruckguß-Aggregateträger ausgebildet ist.

8. Nebenaggregatemodul nach einem der vorhergehenden Ansprüche,
**dadurch gekennzeichnet, daß**
der Aggregateträger (11) an einer Stirnseite oder seitlich an der Brennkraftmaschine befestigbar ist.

9. Nebenaggregatemodul nach einem der vorhergehenden Ansprüche,
**dadurch gekennzeichnet, daß**
das wenigstens eine Nebenaggregat (48,52,56) ein flüssigkeitsgekühlter Generator (56), und/oder eine Wasserpumpe, und/oder eine Lenkhilfepumpe (48) und/oder eine Ölpumpe ist.

10. Nebenaggregatemodul nach einem der vorhergehenden Ansprüche,
**dadurch gekennzeichnet, daß**
das wenigstens eine Nebenaggregat ein Klimakompressor (52) ist.

11. Nebenaggregatemodul nach Anspruch 10,
**dadurch gekennzeichnet, daß**
eine Kolbenlaufbahn (78) des Klimakompressors (52) einstückig mit dem Aggregateträger (11) ausgebildet ist.

12. Nebenaggregatemodul nach einem der vorhergehenden Ansprüche,
**dadurch gekennzeichnet, daß**
ferner eine Riemenspanneinrichtung (60) am Aggregateträger (11) angeordnet ist.

## Claims

1. Secondary assembly module of an internal combustion engine, with an assembly carrier (11) capable of being fastened to the internal combustion engine having at least one secondary assembly (48, 52, 56) fastened to the assembly carrier (11) and driven by the internal combustion engine by means of a drive belt, **characterized in that** a housing (36, 38, 40) of the at least one secondary assembly (48, 52, 56) is at least partially produced in one piece with the assembly carrier (11).

2. Secondary assembly module according to Claim 1, **characterized in that** the at least one secondary assembly (48, 52, 56) is connected to a belt pulley (44) of the crankshaft of the internal combustion engine by means of a drive belt (42), in particular a poly-V-belt.

3. Secondary assembly module according to Claim 2, **characterized in that** each secondary assembly (48, 52, 56) has a belt pulley (46, 50, 54), the drive belt (42) running essentially in one plane over the belt pulley (44) of the crankshaft and over the belt pulleys (46, 50, 54) of the secondary assemblies (48, 52, 56).

4. Secondary assembly module according to one of the preceding claims, **characterized in that** a housing (36, 38, 40) of the at least one secondary assembly (48, 52, 56) is completely produced in one piece with the assembly carrier (11).

5. Secondary assembly module according to one of the preceding claims, **characterized in that** fluid ducts for the inflow and/or outflow of a cooling and/or working medium for at least one secondary assembly (48, 52, 56) are produced integrally in the assembly carrier (11).

6. Secondary assembly module according to one of the preceding claims, **characterized in that** structural elements (62-118) of the at least one secondary assembly (48, 52, 56) are produced in one piece with the assembly carrier (11).

7. Secondary assembly module according to one of the preceding claims, **characterized in that** the assembly carrier (11) is produced as an aluminium die-cast assembly carrier.

8. Secondary assembly module according to one of the preceding claims, **characterized in that** the assembly carrier (11) is capable of being fastened to the internal combustion engine on one end face or laterally.

9. Secondary assembly module according to one of the preceding claims, **characterized in that** the at least one secondary assembly (48, 52, 56) is a liquid-cooled alternator (56) and/or a water pump and/or a steering assistance pump (48) and/or an oil pump.

10. Secondary assembly module according to one of the preceding claims, **characterized in that** the at least one secondary assembly is an air-conditioning compressor (52).

11. Secondary assembly module according to Claim 10, **characterized in that** a piston runway (78) of the air-conditioning compressor (52) is produced in one piece with the assembly carrier (11).

12. Secondary assembly module according to one of the preceding claims, **characterized in that**, furthermore, a belt-tensioning device (60) is arranged on the assembly carrier (11).

## Revendications

1. Module d'organe accessoire pour moteur à combustion interne, comprenant un support d'organe (11) pouvant être fixé au moteur à combustion interne et au moins un organe accessoire (48, 52, 56) fixé au support d'organe (11) et entraîné au moyen d'une courroie d'entraînement par le moteur à combustion interne, **caractérisé en ce qu'**un boîtier (36, 38, 40) de l'au moins un organe accessoire (48, 52, 56) est formé au moins partiellement d'une pièce avec le support d'organe (11).

2. Module d'organe accessoire selon la revendication 1, **caractérisé en ce que** l'au moins un organe accessoire (48, 52, 56) est connecté au moyen d'une courroie d'entraînement (42), en particulier une courroie en V multiple, à une poulie à courroie (44) du vilebrequin du moteur à combustion interne.

3. Module d'organe accessoire selon la revendication 2, **caractérisé en ce que** chaque organe accessoire (48, 52, 56) présente une poulie à courroie (46, 50, 54), la courroie d'entraînement (42) passant sur la poulie à courroie (44) du vilebrequin et les poulies à courroie (46, 50, 54) de l'organe accessoire (48, 52, 56) essentiellement dans un même plan.

4. Module d'organe accessoire selon l'une quelconque des revendications précédentes, **caractérisé en ce qu'**un boîtier (36, 38, 40) de l'au moins un organe accessoire (48, 52, 56) est réalisé entièrement d'une pièce avec le support d'organe (11).

5. Module d'organe accessoire selon l'une quelconque des revendications précédentes, **caractérisé en ce que** des conduits de fluide pour l'apport et/ou l'évacuation d'un fluide de refroidissement et/ou de travail pour au moins un organe accessoire (48, 52, 56) sont réalisés intégralement dans le support d'organe (11).

6. Module d'organe accessoire selon l'une quelconque des revendications précédentes, **caractérisé en ce que** des éléments de construction (62-118) de l'au moins un organe accessoire (48, 52, 56) sont réalisés d'une pièce avec le support d'organe (11).

7. Module d'organe accessoire selon l'une quelconque des revendications précédentes, **caractérisé en ce que** le support d'organe (11) est réalisé en tant que support d'organe en fonte d'aluminium.

8. Module d'organe accessoire selon l'une quelconque des revendications précédentes, **caractérisé en ce que** le support d'organe (11) peut être fixé sur un côté frontal ou latéralement au moteur à combustion interne.

9. Module d'organe accessoire selon l'une quelconque des revendications précédentes, **caractérisé en ce que** l'au moins un organe accessoire (48, 52, 56) est un générateur refroidi par un liquide (56), et/ou une pompe à eau, et/ou une pompe auxiliaire (48), et/ou une pompe à huile.

10. Module d'organe accessoire selon l'une quelconque des revendications précédentes, **caractérisé en ce que** l'au moins un organe accessoire est un compresseur de climatisation (52).

11. Module d'organe accessoire selon la revendication 10, **caractérisé en ce qu'**une piste de déplacement du piston (78) du compresseur de climatisation (52) est réalisée d'une pièce avec le support d'organe (11).

12. Module d'organe accessoire selon l'une quelconque des revendications précédentes, **caractérisé en ce qu'**en outre un dispositif de tensionnement de courroie (60) est disposé sur le support d'organe (11).
